# EUROPÄISCHE PATENTSCHRIFT

(11) **EP 1 059 160 B1**
(45) Veröffentlichungstag und Bekanntmachung des Hinweises auf die Patenterteilung: **01.09.2004**
(21) Anmeldenummer: 00112418.9
(22) Anmeldetag: 09.06.2000
(51) Int. Cl.: B32B 5/02, G10K 11/162

(54) **Verbundmaterial**
Laminate
Laminé

(30) Priorität: 10.06.1999 DE 19926379
(43) Veröffentlichungstag der Anmeldung: 13.12.2000
(73) Patentinhaber: DEUTSCHE INSTITUTE FÜR TEXTIL- UND FASERFORSCHUNG STUTTGART Stiftung des öffentlichen Rechts, 73770 Denkendorf (DE)
(72) Erfinder: Elpasidis, Christos, Dipl.-Ing., 73249 Wernau a.N. (DE); Planck, Heinrich Prof. Dr. Ing., 72622 Nürtingen (DE); Stegmaier, Thomas Dr., 73277 Owen (DE); Milwich, Markus Dr., 72644 Oberbohlingen (DE); Schneider, Petra Dipl.-Ing., 72076 Tübingen (DE)
(74) Vertreter: Patentanwälte Ruff, Wilhelm, Beier, Dauster & Partner

(56) Entgegenhaltungen:
- EP-A- 0 692 563
- DE-A- 2 201 637
- US-A- 5 908 673

## Beschreibung

Die Erfindung bezieht sich auf ein flächiges Verbundmaterial mit mindestens einer Mittelschicht und zwei, die Mittelschicht bedeckenden Außenschichten, wobei die mindestens eine Mittelschicht und die Außenschichten fest miteinander verbunden sind, die mindestens eine Mittelschicht ein abstandhaltendes Fasermaterial aufweist, das komprimierbar ist, schwingungs- und schalldämpfend wirkt, und wobei mindestens eine Außenschicht aus Nichtmetall ist und/oder beide Außenschichten eine textile Struktur besitzen.

Verbundmaterialien oder Verbundwerkstoffe werden in den verschiedensten Bereichen eingesetzt. Sie bestehen aus verschiedenartigen, untereinander fest verbundenen Materialien, wodurch wesentliche Eigenschaften der Einzelkomponenten vorteilhaft miteinander kombiniert sind. Die bekanntesten Verbundmaterialien sind z.B. Verbundfolien, Verbundglas oder Verbundplatten. Diese werden unter anderem als Leichtbaustoffe im Fahrzeug- und Gerätebau, in der Luft- und Raumfahrttechnik, der Möbelindustrie und im Verpackungswesen verwendet. Die im Fahrzeugbau verwendeten Verbundwerkstoffe dienen vorwiegend zur Gewichtsersparnis und zur Erhöhung der Formsteifigkeit der Karosserie oder sonstiger Teile. Verbundwerkstoffe werden dabei häufig durch eine Sandwichbauweise gebildet, d.h. zwischen zwei Deckschichten aus Metall, Holz oder ähnlichem ist ein wabenartiger Stützkern geklebt oder gelötet. Durch den wabenartig ausgebildeten Stützkern ist eine plastische Verformung des Verbundwerkstoffes nur unter Aufbringung sehr großer Kräfte, und unter der Gefahr der Zerstörung des Stützkernes, möglich.

Aus der US-Patentschrift US 5 908 673 ist ein textiles, dämpfendes Material bekannt, das beispielsweise als Tee-off Golfmatte verwendet werden kann. Die Matte besitzt Außenschichten aus nicht-metallischem Material, beispielsweise eine Stabilisierungsschicht aus Kunststoff sowie eine Mittelschicht aus textilem Material. Die textile Mittelschicht hat eine Oberschicht und eine Unterschicht aus Multifilament-Garn (multi-thread yarn) und dazwischen Stoßfäden (pile threads), die einerseits mit der Oberschicht und andererseits mit der Unterschicht verbunden sind.

Aus der Offenlegungsschrift DE 2 201 638 ist eine Panzerplatte mit erhöhter Durchschlußfestigkeit bekannt. Die Panzerplatte besitzt ein Vorderblech und ein Hinterblech und dazwischen einen Verbundkörper aus Stahlfaservlies und Schaumstoff. Die Bleche und der Verbundkörper sind mittels eines Polyurethan-Haftklebers miteinander verklebt.

### AUFGABE UND LÖSUNG

Aufgabe der Erfindung ist es, ein flächiges, dämpfendes Verbundmaterial der eingangs erwähnten Art zu schaffen, das gegenüber dem Stand der Technik eine verbesserte Dämpfigkeit besitzt.

Diese Aufgabe wird erfindungsgemäß dadurch gelöst, dass das abstandhaltende Fasermaterial ein Flockmaterial aus Flockfasern ist.

Mindestens eine Außenschicht, insbesondere beide Außenschichten des Verbundmaterials können aus einem nichtmetallischen, plastisch verformbaren Material, beispielsweise einer Folie gebildet werden. Eine Außenschicht kann auch aus einer Metallfolie bestehen, bevorzugt sind jedoch nichtmetallische Folien für beide Außenschichten, wenn diese aus Folien gebildet sind. Als Folien können alle herkömmlichen Kunststofffolien, beispielsweise Polymerfolien eingesetzt werden. Es ist auch möglich Außenschichten einzusetzen, die eine Textilstruktur aufweisen, was bei mindestens einer Außenschicht, vorzugsweise bei beiden Außenschichten, bevorzugt ist. Als Textilien können beispielsweise Mattenstoffe, Vliese oder Gelege eingesetzt werden. Bevorzugt werden jedoch Gewebe oder Maschenstoffe, wie Gewirke oder Gestricke, als Außenschichten eingesetzt. Um das Verbundmaterial besonders zugfest auszubilden, können die Außenschichten beispielsweise aus einem Carbongewebe sein. Die technischen Textilien, insbesondere die Maschenstoffe, bestehen vorzugsweise aus Fasern, Garnen, bzw. Fäden oder Drähten mit einem Faser- bzw. Drahtdurchmesser von 10 µm bis ca. 1 mm. Die Garne bzw. Fäden können monofil und/oder mulitfil sein. Die Fasern, Garne oder Drähte können gekreuzt oder parallel, vorzugsweise gekreuzt, angeordnet sein. Bei einer Außenschicht aus metallischem Textil insbesondere aus Metallgewebe oder einer Metall-Maschenware können die Drähte vorzugsweise untereinander verlötet oder verschweißt sein und beispielsweise eine Art Sieb bilden. Das Textilmaterial kann aus synthetischen Fasern, Naturfasern, Kohlefasern, Mineralfasern, keramischen Fasern und/oder Metallfasern bzw. -drähten gebildet sein. Dabei sind Kohlefasern und synthetische Fasern bevorzugt. Die nichtmetallischen Fasern bieten den Vorteil der Korrosionsbeständigkeit und der Gewichtseinsparung gegenüber metallischen Fasern. Es kann auch gemischtes Fasermaterial, beispielsweise eine Außenschicht aus Natur- und synthetischen Fasern eingesetzt werden. Die beiden Außenschichten können aus unterschiedlichen Materialien aufgebaut sein, beispielsweise kann eine Außenschicht aus einer Folie und die andere Außenschicht aus einem Textilmaterial, beispielsweise aus einem Gewebe bestehen. Als Gewebe kann dabei beispielsweise ein Metallgewebe eingesetzt werden. Bevorzugt sind die beiden Außenschichten jedoch aus dem- selben Material aufgebaut.

Als Außenschicht können auch Abstandstextilien, wie Abstandsgewebe, -gewirke oder -gestricke eingesetzt werden, die ebenfalls zu den technischen Textilien zu zählen sind. Dabei sind einzelne, vorzugsweise gewebte, gestrickte oder gewirkte Textilschichten in volumengebender Anordnung übereinandergeschichtet. Bei einer besonderen Ausführungsform sind zwischen zwei Textilschichten Abstandhalter vorgesehen. Als Abstandshalter können Abstandsflächen eingearbeitet, beispielsweise eingewebt werden, die unter einem bestimmten Winkel, beispielsweise 45°, von einer Schicht zur anderen verlaufen.

Es können auch Pins als Abstandshalter eingesetzt werden, die unter einem bestimmten Winkel zwischen die Schichten eingeschossen werden. Bervorzugt werden jedoch Stehfäden verwendet, mit denen die verschiedenen Schichten miteinander verbunden sind und die partiell in die einzelnen Schichtlagen eingebunden sind. Beispielsweise kann ein gewebtes Abstandstextil aus zwei gewebten Decklagen mit einem zwischen den Decklagen befindlichen Fadensystem, insbesondere Kettfadenund/oder Schußfadensystem aufgebaut sein. Bei Maschenabstandstextilien, also gewirkten oder gestrickten Abstandstextilien, können beispielsweise zwei separate Maschenwarenflächen durch mehr oder weniger steife Abstandsfäden miteinander verbunden sein. Bei der Verwendung von Abstandstextilien werden besonders biegesteife und gleichzeitig aufgrund ihres hohen Hohlraumvolumenanteils leichte Verbundwerkstoffe geschaffen. Je weiter die einzelnen Schichten voneinander entfernt sind, desto biegesteifer wird das Bauteil. Die Abstandshalter, insbesondere die Stehfäden können so in den angrenzenden Oberflächenschichten der Schichten verankert werden, daß ein kompakter Zusammenhalt der dreidimensionalen Textilie besteht und der Verbund in Belastungsrichtung, also in Richtung der Kraftlinien verstärkt wird. Damit lassen sich Abstandstextilien konstruieren, die vollständig gestreckte Stehfäden aufweisen und sich damit in Stehfaden-Richtung wie ein unidirektionales Textil verhalten.

Zur Erhöhung der Steifigkeit des Verbundmaterials können die Außenschichten chemisch, mechanisch und/oder thermisch behandelt werden. Es ist möglich die Außenschichten mit einem Bindemittel zu versehen, beispielsweise sie mit einem Bindemittel zu tränken. Auch ein Rakeln oder Kaschieren der Außenschichten mit Bindemittel ist möglich. Als Bindemittel können alle aushärtbaren Substanzen eingesetzt werden. Bevorzugt werden dabei Harze, beispielsweise Epoxyharz, eingesetzt. Nach der Bindemittel-Behandlung können die Außenschichten thermisch nachbehandelt, beispielsweise bei einem bestimmten Druck oder einer bestimmten Temperatur in einem Autoklaven ausgehärtet werden. Ein weiterer Effekt solcher Nachbehandlungen ist der Erhalt einer geschlossenen Oberfläche der Außenschicht. Die Oberflächen können beispielsweise wasserdicht, resistent gegen agressive Flüssigkeiten oder dergleichen ausgebildet werden. Als Bindemittel kommen auch Thermoplasten, insbesondere Hot-Melts, in Frage.

Die Mittelschicht des erfindungsgemäßen Verbundmaterials ist aus einem abstandhaltenden Fasermaterial gebildet. Unter abstandhaltenden Fasermaterialien im Sinne der Anmeldung werden alle Fasermaterialien in volumengebender Anordnung verstanden, die die beiden Außenschichten auf Abstand halten, beispielsweise Abstandstextilien, Flockmaterial oder dergleichen. Diese Materialien zeichnen sich durch einen besonders hohen Hohlraumvolumenanteil aus.

Die Mittelschicht des Verbundmaterials kann aus voneinander verschiedenen Phasen gebildet sein. Das abstandhaltende Fasermaterial der Mittelschicht bildet eine Phase, ein Füllstoff, insbesondere ein Bindemittel, beispielsweise ein Kleber, und/oder Gase, können andere Phasen bilden. In der Regel sind 1 bis 5, insbesondere 1 bis 3 Mittelschichten vorhanden.

Die Mittelschicht kann aus verschiedenartigen Werkstoffen in volumengebender Konstruktion aufgebaut sein. Sie kann aus einer einzigen Lage bzw. Schicht oder aus mehreren Lagen bzw. Schichten bestehen. Im Falle mehrerer Lagen können sich die einzelnen Lagen in Konstruktion und Werkstoff unterscheiden. Besonders vorteilhaft ist es, die Mittelschicht mit einer porösen Struktur auszuführen, die durch Einschluß von gasförmigen Medien gebildet wird. Die poröse Struktur kann mindestens teilweise durch einen Füllstoff ausgefüllt sein. Durch die verschiedenen Phasen in der mindestens einen Mittelschicht, insbesondere durch das abstandhaltende Fasermaterial und die darin befindlichen Hohlräume, die mit gasförmigen Medien, insbesondere Luft, und/oder einem Füllstoff, gefüllt sein können, wird der Schall beim Durchtritt durch den Verbund gedämpft.

Die mindestens eine Mittelschicht ist aus Flockmaterial gebildet, das aus Flockfasern aufgebaut ist. Die einzelnen Flockfasern wirken dabei wie Stege, die die beiden Außenschichten oder andere Mittelschichten auf Abstand halten. Die Flockfasern können in einem beliebigen Winkel zu den Außenschichten oder zu den anderen Mittelschichten stehen, vorzugsweise stehen sie jedoch im wesentlichen senkrecht dazu. Je nach Fasermaterial sind die Flockfasern mehr oder weniger biegsam, so daß der Verbund komprimierbar ist. Als Fasermaterial können Natur-, synthetische, Keramik-, Metall-, und/oder Keramikfasern eingesetzt werden. Die Mittelschicht kann beispielsweise aus Edelstahlfaserflock oder aus Polyamidfaserflock aufgebaut sein. Der Durchmesser der Flockfasern kann im Bereich von 4 µm bis 15 µm, insbesondere 6µm bis 10 µm liegen. Die Herstellung der Flockfasern erfolgt durch Ablängen von Endlosfilamenten der entsprechenden Ausgangsmaterialien. Typische Schnittlängen solcher Flockfasern liegen im Bereich von 0,5 mm bis 5 mm, können aber auch darunter oder darüber liegen. Mit verschiedenen Schnittlängen des Flocks können unterschiedliche Abstände der Mittelschichten bzw. der Außenschichten erreicht werden. Durch die Auswahl der Faserdurchmesser und Materialien können unterschiedliche Steifigkeiten bzw. dynamisches Verhalten erreicht werden. Außerdem ist es möglich, durch partiell unterschiedliche Schnittlängen unterschiedliche Gesamt-Wandstärken zu erreichen, um damit maßgeschneiderte Gradientenwerkstoffe zu generieren. Durch die Variation der Schnittlänge beispielsweise in Längs- oder Querrichtung können Verbundmaterialien mit partiell unterschiedlichen Biegesteifigkeiten geschaffen werden.

Bei einer Weiterbildung des erfindungsgemäßen Verbundmaterials kann die mindestens eine Mittelschicht ein Abstandstextil, insbesondere ein Abstandsgewebe, -gewirk, oder -gestrick sein oder enthalten. Als Abstandstextilien kommen wie erwähnt verschiedene, in volumengebender Anordnung übereinander- geschichtete, Textilschichten in Frage. Bevorzugt sind Textilschichten, zwischen die Abstandshalter, insbesondere Stehfäden eingearbeitet sind.

Beim erfindungsgemäßen Verbundmaterial können, wie beschrieben, verschiedenste Außenschicht- bzw. Mittelschichtmaterialien beliebig kombiniert werden. Das Verbundmaterial kann zum Beispiel aus zwei Außenschichten aus Textil und einer Mittelschicht aus Flock, zwei Außenschichten aus Abstandstextil und einer Mittelschicht aus Flock, zwei Außenschichten aus Folienmaterial und einer Mittelschicht aus Flock, zwei Außenschichten aus Abstandstextil und einer Mittelschicht aus Abstandstextil, zwei Außenschichten aus Folienmaterial und einer Mittelschicht aus Abstandstextil usw. aufgebaut sein. Es können auch mehrere Mittelschichten vorgesehen sein, eine der Mittelschichten kann beispielsweise ein Abstandstexil sein auf dessen Deckschichten weitere Schichten aus Flock aufgebracht sind.

Besonders bevorzugt ist es, die mindestens eine Mittelschicht mit den beiden Außenschichten durch ein Bindemittel mit einander zu verbinden. Die Mittelschicht kann dabei vollflächig mit den Außenschichten verbunden sein, beispielsweise durch Verbinden der Deckschichten eines Abstandstextils mit den Außenschichten. Die Mittelschicht kann aber auch nur punktuell mit den Außenschichten verbunden sein, beispielsweise bei einer Mittelschicht aus Flock, bei der die Stirnseiten der Flockfasern als Klebefläche dienen. Als Bindemittel ist ein textiler Haftverschluß zwischen Mittelschicht und den Außenschichten möglich. Das Bindemittel dient zur stoffschlüßigen Verbindung von Mittelschicht und Außenschicht, wobei vorzugsweise eine adhäsive Verbindung mit Hilfe eines Klebers oder eines Hot-Melts hergestellt wird. Weiterhin können einzelne Lagen bzw. Mittelschichten durch Bindemittel untereinander verbunden werden, wobei für beide Aufgaben verschiedenartige Bindemittel verwendet werden können. Als Bindemittel kann dabei ein Kleber mit einer oder mehreren Klebekomponenten verwendet werden. Als Kleber werden bevorzugt Zwei-Komponenten-Kleber aus Kunstharz, insbesondere aus Epoxyharz, eingesetzt. Weiterhin ist es denkbar, Schmelzkleber in Form von Hot-Melt-Folien oder ein Thermoplast einzusetzen. Der Epoxyharzkleber wird beispielsweise als Pfropfen miskroskopischer Abmessungen in den Poren, Hohlräumen oder Unebenheiten der volumengebenden Konstruktion der Mittelschicht eingelagert, oder dient als filmartige Auflage auf die Fasern der Mittelschicht. Besonders bevorzugt ist ein Schmelzkleber, der unter Wärmeeinwirkung unter Verbindung der Schichten als Kleber dient, insbesondere ein schmelzbarer Polymerfaden, der ein Begleitfaden des Maschenstoffes, beispielsweise der gestrickten Deckschicht eines Abstandsgestrickes, ist. Bei lötfähigen Materialien, beispielsweise Stahlfaserflock, kann das Bindemittel auch von einem Lot gebildet werden. Der Bindemittel-Gehalt beträgt je nach Ausführung 10 bis 80 Volumenprozent des Volumens der Mittelschicht. Wird der Begleitfaden, beispielsweise das schmelzbare Polymergarn, als Bindemittel eingesetzt, beträgt der Bindemittel-Gehalt vorzugsweise höchstens 10 %. Das Bindemittel bindet sich bevorzugt an den Grenzschichten zwischen der Mittelschicht und den Außenschichten.

Es ist möglich, die Außenschichten und die Mittelschichten gegenseitig elektrisch leitfähig auszubilden, beispielsweise durch Außenschichten aus einem Metallgewebe und einer Mittelschicht mit die Außenschichten elektrisch verbindenden Metallfasern und/oder Füllstoffen, beispielsweise einem Metallflock oder einem Metall-Abstandstextil. Dadurch ist es möglich den Verbund punktzuschweißen und ihn zum Beispiel für die Automobilproduktion einzusetzen.

Durch die volumengebende Konstruktion der Mittelschicht bietet das Verbundmaterial charakteristische anwendungstypische Eigenschaften. Die Mittelschicht kann insbesondere aufgrund von mit gasförmigen Medien gefüllte offenen oder geschlossenen Poren, bzw. Hohlräumen senkrecht zur Substratebene komprimiert werden. Durch eine Kompression, die schon beim Verkleben der Mittelschicht mit den Außenschichten aufgebracht werden kann und beim anschließenden thermischen Verpressen kann der Porenanteil von anfänglich vorzugsweise 90 bis 30 Volumenprozent auf 40 bis 10 Volumenprozent der Mittelschicht zurückgehen. Der Restporen-Anteil kann besonders vorteilhaft über die Menge des vorher beim Verkleben zugegebenen Bindemittels eingestellt werden. Durch Einstellen des relativen Gasvolumens in der Mittelschicht können die schalldämpfenden Eigenschaften des Verbundmaterials gesteuert werden. Die Kompressibilität der Mittelschicht kann durch ein Druckprüfverfahren mit Hilfe eines Druckstempels (DIN EN ISO 5084) bestimmt werden. Dabei wird die Mittelschicht in einem ersten Prüfungsschritt vorzugsweise bei einem Druck von 20 mbar komprimiert und die Dickenänderung gegenüber der Ausgangsdicke der Mittelschicht gemessen. In einem zweiten Prüfungsschritt wird der Prüfdruck dann auf vorzugsweise 200 mbar erhöht und ebenfalls die Dickenänderung bestimmt. Bei einer Steigerung des Prüfdrucks von 20 auf 200 mbar ergibt sich eine Dickenreduzierung von circa 5 % bis 25 %.

Ein Verbundmaterial dieser Eigenschaft weist vorzugsweise eine Materialstärke von 0,1 mm bis 5,0 mm, insbesondere von 0,5 mm bis 3 mm auf. Die Außenschichten besitzen dabei zusammen vorzugsweise eine geringere Materialstärke als die Mittelschicht. Sie weisen eine Dicke von 0,05 mm bis 1,5 mm, vorzugsweise kleiner als 1 mm, auf. Das Massenverhältnis der Außenschichten zur Mittelschicht kann von 80 % zu 20 % bis hin zu 95 % zu 5 % betragen, wobei die Bindemittelmasse und ggf. der Füllstoff in der Mittelschichtmasse enthalten ist. Durch den Einsatz des Verbundes lassen sich 40 % bis 80 % des Gewichtes eines Vollmaterials gleicher Eigenschaften einsparen.

Ferner wird die Aufgabe erfindungsgemäß durch die Merkmale des unabhängigen Anspruchs 22 gelöst.

Weitere Einzelheiten und Vorteile ergeben sich aus der nachfolgenden Beschreibung von bevorzugten Ausführungsformen in Verbindung mit der Zeichnung und den Unteransprüchen.

### FIGURENBESCHREIBUNG

Ein Ausführungsbeispiel der Erfindung ist in der Zeichnung dargestellt und wird im folgenden näher erläutert. In der Zeichnung zeigen:
- Fig. 1: einen Längsschnitt durch die einzelnen Schichten eines Verbundmaterials,
- Fig. 2: eine Draufsicht auf das Verbundmaterial.

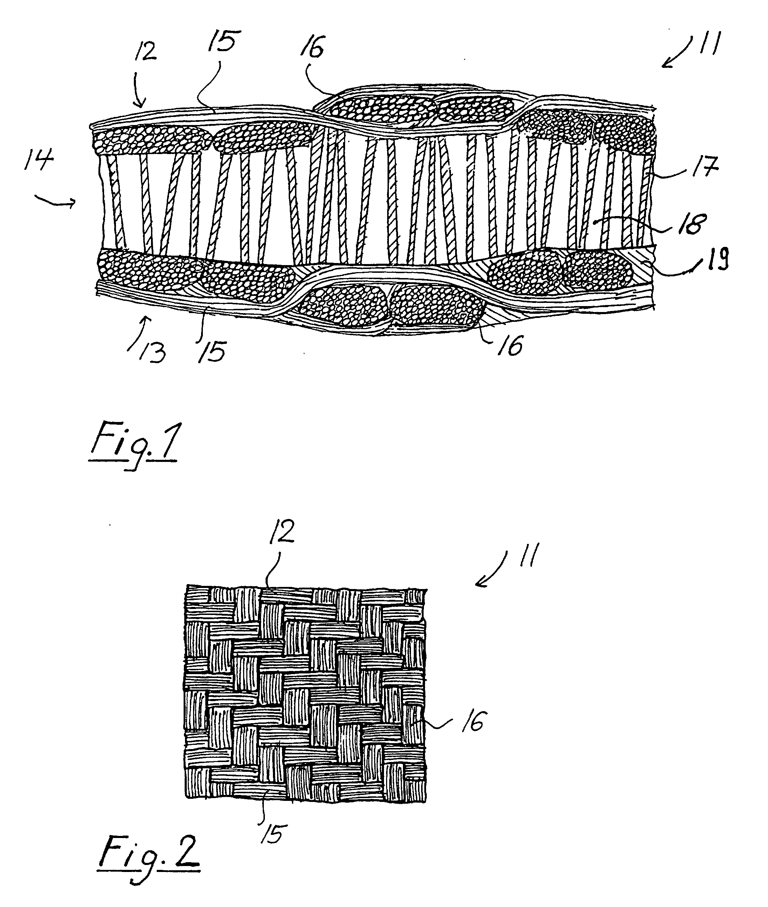

Fig. 1 zeigt einen Verbund 11 mit zwei im wesentlichen planen Außenschichten 12, 13 und einer Mittelschicht 14 aus Flockmaterial. Die beiden Außenschichten 12, 13 bedecken die Strukturoberflächen der Mittelschicht 14.

Die Außenschichten 12, 13 bestehen aus Carbongewebe. Das Carbongewebe ist mit einer Köper-Bindung gewebt. Dabei überbrückt eine in Fig. 1 im Längsschnitt dargestellte Faserschar 15 zwei senkrecht zu ihr verlaufende in Fig. 1 im Querschnitt dargestellte Faserscharen 16 und unterquert danach zwei senkrecht zu ihr verlaufende Faserscharen 16. Die parallel oberhalb und unterhalb zu dieser Faserschar 15 verlaufenden Scharen sind ebenfalls derart gelegt, jedoch unterqueren sie die zu ihr senkrechten Faserscharen 16 eine Schar früher bzw. später. Die Faserscharen 15, 16 bestehen jeweils aus mehreren hundert parallel flächig nebeneinander angeordneten Einzelfilamenten.

Die Mittelschicht grenzt unmittelbar an die beiden Außenschichten 12, 13 an. Sie besteht aus Stahl-Flock. Die Schnittlängen der Flockfasern 17 betragen ca. 1 mm. Alternativ können sie auch ca. 2 mm betragen. Die Mittelschicht 14 kann alternativ aus einem Polyamid-Flock mit Flockfasern 17 der Schnittlänge 1 mm gebildet werden. Zur Herstellung der Flockfasern werden Endlosfilamente aus Stahl bzw. Polyamid auf die entsprechenden Schnittlängen gekürzt. Die Flockfasern 17 stehen im wesentlichen senkrecht auf den quer- bzw. längsgelegten Faserscharen 15, 16 der Außenschichten 12, 13 und dienen dabei als Abstandshalter der beiden Schichten. Die Mittelschicht 14 aus Flock besitzt einen hohen Hohlraumvolumenanteil. Die Hohlräume 18 der Mittelschicht sind mit Luft, gasförmigen Medien oder sonstigen Füllstoffen gefüllt.

Zur Verbindung der Mittelschicht 14 mit den beiden Außenschichten 12, 13 wird ein Bindemittel, insbesondere ein Acrylatkleber verwendet. Dabei wird zunächst die Oberfläche einer Außenschicht 12 mit Bindemittel getränkt und diese dann mit den Flockfasern 17 beflockt. Die andere Außenschicht 13 wird ebenfalls mit Bindemittel getränkt und auf die beflockte Außenschicht 12 gepresst.

Zur Erhöhung der Steifigkeit des Verbundes 11 werden die Außenschichten 12, 13 mit einem Harz getränkt und in einem Autoklaven bei einer bestimmten Temperatur und einem bestimmten Druck ausgehärtet. Es ist auch möglich, wie in Fig. 1 im Grenzbereich zwischen Mittelschicht und unterer Außenschicht dargestellt, mindestens die Innenfläche einer bzw. beider Außenschichten mit Bindemittel 19 oder dgl. einzuebnen und/oder abzudichten. Es ist auch möglich, die Außenflächen der Außenschichten glatt beziehungsweise eben auszugestalten. Anstelle eines Carbongewebes kann auch ein Metallgewebe vorgesehen sein.

Bei einem weiteren in den Zeichnungen nicht dargestellten Ausführungsbeispiel wird die Mittelschicht 14 aus einem Abstandsgewebe gebildet. Das Abstandsgewebe besteht aus zwei gewebten Deckschichten zwischen die als Abstandshalter Stehfäden eingearbeitet sind. Die Stehfäden stehen im wesentlichen senkrecht auf den Deckschichten und sind in die Oberfläche der beiden Deckschichten eingewebt. Der Hohlraumvolumenanteil im Stehfaden-Bereich zwischen den beiden Deckschichten ist sehr hoch.

Zur Herstellung des Abstandsgewebes wird eine Abstandswebmaschine eingesetzt, die die beiden Deckschichten und die dazwischen befindlichen Stehfäden in einem Arbeitsgang webt.

## Patentansprüche

1. Flächiges Verbundmaterial mit mindestens einer Mittelschicht (14) und zwei, die mindestens eine Mittelschicht (14) bedeckenden Außenschichten (12, 13), wobei die mindestens eine Mittelschicht (14) und die Außenschichten fest miteinander verbunden sind, die mindestens eine Mittelschicht (14) ein abstandhaltendes Fasermaterial aufweist, das komprimierbar ist, schwingungs- und schalldämpfend wirkt, und wobei mindestens eine Außenschicht (12, 13) aus Nichtmetall ist und/oder beide Außenschichten (12, 13) eine textile Struktur besitzen, **dadurch gekennzeichnet, dass** das abstandhaltende Fasermaterial ein Flockmaterial aus Flockfasern ist.

2. Verbundmaterial nach Anspruch 1, **dadurch gekennzeichnet, daß** mindestens eine Außenschicht aus nichtmetallischem, plastisch verformbaren Material, insbesondere einer Folie, gebildet wird.

3. Verbundmaterial nach Anspruch 1 oder 2, **dadurch gekennzeichnet, daß** mindestens eine Außenschicht (12, 13) eine Textilstruktur aufweist, vorzugsweise ein Gewebe, Gewirk oder Gestrick, insbesondere ein Carbongewebe ist.

4. Verbundmaterial nach einem der vorhergehenden Ansprüche, **dadurch gekennzeichnet, daß** die Textilstruktur aus Natur-, synthetischen, keramischen, Mineral-, Kohle- und/oder Metallfasern aufgebaut ist.

5. Verbundmaterial nach einem der vorhergehenden Ansprüche, **dadurch gekennzeichnet, daß** mindestens eine Außenschicht (12, 13) zur Bildung einer geschlossenen Oberfläche und/oder zu deren Versteifung mit einem Bindemittel (19) versehen ist, vorzugsweise mit einem Harz getränkt, gerakelt oder kaschiert ist.

6. Verbundmaterial nach einem der vorhergehenden Ansprüche, **dadurch gekennzeichnet, daß** die mindestens eine Mittelschicht (14), vorzugsweise mehrere Mittelschichten (14), eine poröse Struktur aufweisen.

7. Verbundmaterial nach einem der vorhergehenden Ansprüche, **dadurch gekennzeichnet, daß** die mindestens eine Mittelschicht (14) aus einem anderen Material als die Außenschichten (12, 13) besteht.

8. Verbundmaterial nach einem der vorhergehenden Ansprüche, **dadurch gekennzeichnet, daß** die Flockfasern Natur-, synthetische, keramische, Mineral-, Kohle-, und/oder Metallfasern, insbesondere Stahlfasern sind.

9. Verbundmaterial nach Anspruch 8, **dadurch gekennzeichnet, daß** der Durchmesser der Flockfasern 4 µm bis 15 µm, insbesondere 6 µm bis 10 µm, beträgt.

10. Verbundmaterial nach einem der Ansprüche 8 oder 9, **dadurch gekennzeichnet, daß** als Mittelschicht Flockmaterial mit Flockfasern (17) verschiedener Schnittlängen einsetzbar ist, wobei vorzugsweise in Längs- und/oder Querrichtung des Verbundmaterials ein Gradient der Schnittlänge der Flockfasern (17) vorgesehen ist, durch den das Verbundmaterial in Längsund/oder Querrichtung beispielsweise verschiedene Biegesteifigkeiten aufweist.

11. Verbundmaterial nach einem der vorhergehenden Ansprüche, **dadurch gekennzeichnet, daß** die mindestens eine Mittelschicht (14) ein Abstandstextil, insbesondere ein Abstandsgewebe, - gewirk oder -gestrick enthält, wobei insbesondere mindestens zwei Textilschichten, vorzugsweise zwei Deckschichten durch Abstandshalter, insbesondere Stehfäden, voneinander beabstandet sind.

12. Verbundmaterial nach einem der vorhergehenden Ansprüche, **dadurch gekennzeichnet, daß** die mindestens eine Mittelschicht (14) und die Außenschichten (12, 13) miteinander verklebt sind, wobei insbesondere die Mittelschicht (14) und die Außenschichten durch ein Bindemittel, insbesondere einen Kleber, verbunden sind.

13. Verbundmaterial nach einem der vorhergehenden Ansprüche, **dadurch gekennzeichnet, daß** einzelne Mittelschichten (14) durch ein Bindemittel miteinander verklebt sind.

14. Verbundmaterial nach Anspruch 12 oder 13, **dadurch gekennzeichnet, daß** das Bindemittel mindestens eine Klebekomponente aufweist, insbesondere ein Zwei-Komponenten-Kleber ist.

15. Verbundmaterial nach einem der Ansprüche 12 bis 14, **dadurch gekennzeichnet, daß** das Bindemittel ein Schmelzkleber, insbesondere ein Thermoplast oder eine Hot-Melt-Folie ist.

16. Verbundmaterial nach einem der Ansprüche 12 bis 15, **dadurch gekennzeichnet, daß** das Bindemittel ein schmelzbares Polymergarn ist, wobei das Polymergarn ein Begleit- oder Trägergarn des Abstandstextils, insbesondere dessen Deckschichten, ist und unter Wärmeeinwirkung unter Verbindung der Schichten als Bindemittel dient.

17. Verbundmaterial nach einem der vorhergehenden Ansprüche, **dadurch gekennzeichnet, daß** es einen Gehalt an Bindemittel und ggf. zusätzlichen Füllstoff von 5 bis 85 Volumenprozent, vorzugsweise 10 bis 80 Volumenprozent des Volumens der Mittelschicht (14) einnimmt, aufweist.

18. Verbundmaterial nach einem der vorhergehenden Ansprüche, **dadurch gekennzeichnet, daß** es in der mindestens einen Mittelschicht (14) ein Gasvolumen, insbesondere in Form von Poren, in der Größe von 10 bis 40 Volumenprozent der Mittelschicht (14) aufweist.

19. Verbundmaterial nach einem der vorhergehenden Ansprüche, **dadurch gekennzeichnet, daß** es eine Materialstärke von 0,1 mm bis 5,0 mm, insbesondere von 0,5 mm bis 3 mm aufweist.

20. Verbundmaterial nach einem der vorhergehenden Ansprüche, **dadurch gekennzeichnet, daß** beide Außenschichten (12, 13) zusammen eine geringere Materialstärke aufweisen, als die mindestens eine Mittelschicht (14).

21. Verbundmaterial nach einem der vorhergehenden Ansprüche, **dadurch gekennzeichnet, daß** es ein Gewicht von 20 % bis 60 %, insbesondere von 30 % bis 45 %, des Gewichtes eines Vollmaterials gleicher Steifigkeit aufweist.

22. Flächiges Verbundmaterial, mit mindestens einer Mittelschicht (14) und zwei, die mindestens eine Mittelschicht (14) bedeckenden Außenschichten (12, 13), wobei die mindestens eine Mittelschicht (14) und die Außenschichten (14) ein abstandhaltendes Fasermaterial aufweist, das komprimierbar, schwingungs- und schalldämpfend wirkt, und wobei mindestens eine Außenschicht (12, 13) aus Nichtmetall ist und/oder beide Außenschichten (12, 13) eine textile Struktur besitzen, **dadurch gekennzeichnet, dass** die mindestens eine Mittelschicht (14) und die Außenschichten (12, 13) durch ein Bindemittel miteinander verklebt sind, wobei das Bindemittel ein schmelzbares Polymergarn und das Polymergarn ein Begleit- oder Trägergarn eines Abstandstextils ist und unter Wärmeeinwirkung unter Verbindung der Schichten als Bindemittel dient.

23. Verwendung des Verbundmaterials nach einem der vorhergehenden Ansprüche in der Kraftfahrzeugtechnik und/oder in der Luftund Raumfahrttechnik.

## Claims

1. A flat, composite material having at least one middle layer (14) and two outer layers (12, 13) covering the at least one middle layer (14), where the at least one middle layer (14) and the outer layers are firmly bonded to one another, where the at least one middle layer (14) has a compressible, fibrous, spacer material that damps vibrations and sound, and where at least one of the outer layers (12, 13) is fabricated from a nonmetal and/or both outer layers (12, 13) have a textile structure, wherein the fibrous spacer material is a flocked material fabricated from flock fibers.

2. A composite material according to claim 1, wherein at least one outer layer is formed from nonmetallic, plastically deformable material, in particular, a foil.

3. A composite material according to claim 1 or claim 2, wherein at least one outer layer (12, 13) has a textile structure, preferably a woven, knitted, weft or warp knitted structure, in particular, is a carbon-fiber fabric.

4. A composite material according to any of the foregoing claims, wherein the textile structure is configured from natural, synthetic, ceramic, mineral, carbon, and/or metal fibers.

5. A composite material according to any of the foregoing claims, wherein at least one outer layer (12, 13) is provided for the purpose of forming a closed surface and/or is provided with a binder (19) in order to stiffen it, and preferably is impregnated, blade coated, or coated with a resin.

6. A composite material according to any of the foregoing claims, wherein at least one middle layer (14), preferably several middle layers (14), has a porous structure/have porous structures.

7. A composite material according to any of the foregoing claims, wherein the at least one middle layer (14) consists of a material that differs from that/those of the outer layers (12, 13).

8. A composite material according to any of the foregoing claims, wherein the flock fibers are natural, synthetic, ceramic, mineral, carbon, and/or metal fibers, in particular, are steel fibers.

9. A composite material according to claim 8, wherein the diameter of the flock fibers falls within the range 4 µm to 15 µm, in particular, falls within the range 6 µm to 10 µm.

10. A composite material according to claim 8 or claim 9, wherein a flocked material having flock fibers (17) cut to varying lengths may be employed as a middle layer, where a gradient, preferably a gradient along the longitudinal and/or transverse axis of the composite material, that gives the composite material, for example, differing bending stiffnesses along its longitudinal axis and/or transverse axis, is provided.

11. A composite material according to any of the foregoing claims, wherein the at least one middle layer (14) contains a spacer textile, in particular, a woven, knitted, weft or warp knitted, spacer textile, where, in particular, at least two textile layers, preferably two cover layers, are maintained at a distance from one another by spacers, in particular, by upright fibers.

12. A composite material according to any of the foregoing claims, wherein the at least one middle layer (14) and the outer layers (12, 13) are bonded together, where, in particular, the middle layer (14) and the outer layers (12, 13) are bonded together by a bonding agent, in particular, an adhesive.

13. A composite material according to any of the foregoing claims, wherein individual middle layers (14) are bonded together by a bonding agent.

14. A composite material according to claim 12 or claim 13, wherein the bonding agent has at least one adhesive component, in particular, is a two-component adhesive.

15. A composite material according to any of claims 12 - 14, wherein the bonding agent is a melting adhesive, in particular, is a thermoplastic or a hot-melting foil.

16. A composite material according to any of claims 12 - 15, wherein the bonding agent is a fusible, polymer yarn, where the polymer yarn is an attendant yarn or a supporting yarn of the spacer textile, in particular, is an attendant yarn or a supporting yarn of its cover layers, and serves as a bonding agent that bonds the layers together when heated.

17. A composite material according to any of the foregoing claims that has a content of bonding agent and added filler, if any, that falls within the range 5 % to 85 % by volume, preferably falls within the range 10 % to 80 % by volume, referred to the total volume of the middle layer (14).

18. A composite material according to any of the foregoing claims that has gas inclusions, in particular, gas inclusions in the form of pores that account for 10 % to 40 % of the total volume of the middle layer (14), in the at least one middle layer (14).

19. A composite material according to any of the foregoing claims that has an overall thickness falling within the range 0.1 mm to 5.0 mm, in particular, falling within the range 0.5 mm to 3 mm.

20. A composite material according to any of the foregoing claims, wherein the combined thickness of the two outer layers (12, 13) is less than that of the at least one middle layer (14).

21. A composite material according to any of the foregoing claims that has a weight falling within the range 20 % to 60 %, in particular, falling within the range 30 % to 45 %, of the weight of a monolayer material having the same stiffness.

22. A flat, composite material having at least one middle layer (14) and two outer layers (12, 13) covering the at least one middle layer (14), where the at least one middle layer (14) and the outer layers (12, 13) have a compressible, fibrous, spacer material that damps vibrations and sound, and where at least one of the outer layers (12, 13) is fabricated from a nonmetal and/or both outer layers (12, 13) have a textile structure, wherein the at least one middle layer (14) and the outer layers (12, 13) are bonded together by a bonding agent, where the bonding agent is a fusible polymer yarn and the polymer yarn is an attendant yarn or a supporting yarn of a spacer textile and serves as a bonding agent that bonds the layers together when heated.

23. Employment of the composite material according to any of the foregoing claims in automotive engineering and/or aerospace engineering.

## Revendications

1. Matériau composite mince comportant au moins une couche centrale (14) et deux couches externes (12, 13) recouvrant la ou les couche(s) centrale(s) (14), la ou les couche(s) centrale(s) (14) et les couches externes étant étroitement liées les unes aux autres, la ou les couche(s) centrale(s) (14) présentant un matériau fibreux d'écartement, compressible, amortisseur de vibrations et amortisseur de bruits, une couche externe au moins (12, 13) étant en non-métal et/ou les deux couches externes (12, 13) possédant une structure textile, **caractérisé par le fait que** le matériau fibreux d'écartement est un matériau de flocage en floc.

2. Matériau composite conforme à la revendication 1, **caractérisé par le fait qu'**au moins une couche externe est formée d'un matériau non métallique à déformation plastique, notamment d'une feuille.

3. Matériau composite conforme à la revendication 1 ou 2, **caractérisé par le fait qu'**au moins une couche externe (12, 13) présente une structure textile, de préférence un tissage, tissu à mailles ou tricotage, notamment un tissage de carbone.

4. Matériau composite conforme à l'une des revendications précédentes, **caractérisé par le fait que** la structure textile est constituée de fibres naturelles, synthétiques, céramiques, minérales, de carbone et/ou métalliques.

5. Matériau composite conforme à l'une des revendications précédentes, **caractérisé par le fait qu'**au moins une couche externe (12, 13) est prévue pour la formation d'une surface entièrement fermée et/ou pour son renforcement au moyen d'un agent adhésif (19), et qu'elle est de préférence imbibée, raclée ou laminée avec une résine.

6. Matériau composite conforme à l'une des revendications précédentes, **caractérisé par le fait que** la ou les couche(s) centrale(s) (14), et de préférence plusieurs couches centrales (14), présente(nt) une structure poreuse.

7. Matériau composite conforme à l'une des revendications précédentes, **caractérisé par le fait que** la ou les couche(s) centrale(s) (14) est composée d'un matériau autre que celui des couches externes (12, 13).

8. Matériau composite conforme à l'une des revendications précédentes, **caractérisé par le fait que** le floc est constitué de fibres naturelles, synthétiques, céramiques, minérales, de carbone et/ou métalliques, notamment de fibres en acier.

9. Matériau composite conforme à la revendication 8, **caractérisé par le fait que** le diamètre des fibres du floc est situé entre 4 µm et 15 µm, notamment entre 6 µm et 10 µm.

10. Matériau composite conforme à l'une des revendications 8 ou 9, **caractérisé par le fait qu'**il est possible d'utiliser pour la couche centrale du matériau de flocage au floc (17) de différentes longueurs de coupe, un gradient d'indice de la longueur de coupe du floc (17) étant prévu de préférence dans le sens longitudinal et/ou transversal du matériau composite, de sorte qu'il présente dans le sens longitudinal et/ou transversal différentes rigidités en tension.

11. Matériau composite conforme à l'une des revendications précédentes, **caractérisé par le fait que** la ou les couche(s) centrale(s) (14) comprend un textile d'écartement, notamment un tissage, tissu à mailles ou tricotage d'écartement, deux couches textiles au moins, de préférence deux couches extérieures, étant notamment écartées l'une de l'autre par des écarteurs, notamment des fils verticaux.

12. Matériau composite conforme à l'une des revendications précédentes, **caractérisé par le fait que** la ou les couche(s) centrale(s) (14) et les couches externes (12, 13) sont collées les unes aux autres, la couche centrale (14) en particulier et les couches externes étant liées par un agent adhésif, notamment une colle.

13. Matériau composite conforme à l'une des revendications précédentes, **caractérisé par le fait que** chaque couche centrale (14) est collée aux autres par un agent adhésif.

14. Matériau composite conforme à la revendication 12 ou 13, **caractérisé par le fait que** l'agent adhésif présente au moins un composant adhésif et notamment qu'il s'agit d'une colle à deux composants.

15. Matériau composite conforme à l'une des revendications 12 à 14, **caractérisé par le fait que** l'agent adhésif est une colle à fusion, notamment un plastique thermodurcissable ou une feuille d'adhésif fusible.

16. Matériau composite conforme à l'une des revendications 12 à 15, **caractérisé par le fait que** l'agent adhésif est un fil polymère fusible constituant un fil secondaire ou porteur du textile d'écartement, notamment de ses couches extérieures, et tenant lieu d'agent adhésif lorsque les couches sont liées sous l'effet de la chaleur.

17. Matériau composite conforme à l'une des revendications précédentes, **caractérisé par** sa teneur en agent adhésif et, le cas échéant, en une charge supplémentaire, de 5 à 85 pour cent volumétrique, de préférence de 10 à 80 pour cent volumétrique, du volume de la couche centrale (14).

18. Matériau composite conforme à l'une des revendications précédentes, **caractérisé par** un volume de gaz dans la ou les couche(s) centrale(s) (14), notamment sous forme de pores, de la taille de 10 à 40 pour cent volumétrique de la couche centrale (14).

19. Matériau composite conforme à l'une des revendications précédentes, **caractérisé par** son épaisseur de paroi de 0,1 mm à 5,0 mm, notamment de 0,5 mm à 3 mm.

20. Matériau composite conforme à l'une des revendications précédentes, **caractérisé par le fait que** les deux couches externes (12, 13) présentent ensemble une épaisseur de paroi inférieure à celle de la ou des couche(s) centrale(s) (14).

21. Matériau composite conforme à l'une des revendications précédentes, **caractérisé par** son poids de 20 % à 60 %, notamment de 30 % à 45 %, du poids d'un matériau usine de même rigidité.

22. Matériau composite mince comportant au moins une couche centrale (14) et deux couches externes (12, 13) recouvrant la ou les couche(s) centrale(s) (14), la ou les couche(s) centrale(s) (14) et les couches externes présentant un matériau fibreux d'écartement, compressible, amortisseur de vibrations et amortisseur de bruits, une couche externe au moins (12, 13) étant en non-métal et/ou les deux couches externes (12, 13) possédant une structure textile, **caractérisé par le fait que** la ou les couche(s) centrale(s) (14) et les couches externes (12, 13) sont collées les unes aux autres par un agent adhésif, ce dernier étant un fil polymère fusible constituant un fil secondaire ou porteur d'un textile d'écartement et tenant lieu d'agent adhésif lorsque les couches sont liées sous l'effet de la chaleur.

23. Emploi du matériau composite conforme à l'une des revendications précédentes dans l'automobile et/ou l'aéronautique et l'aérospatiale.
